# EUROPÄISCHE PATENTSCHRIFT

(11) **EP 2 842 892 B1**
(45) Veröffentlichungstag und Bekanntmachung des Hinweises auf die Patenterteilung: **11.01.2017**
(21) Anmeldenummer: 14171361.0
(22) Anmeldetag: 05.06.2014
(51) Int. Cl.: B65G 37/02, B65G 47/90

(54) **Verkettungssystem für Obertransfereinrichtungen**
Concatenation system for overhead transfer devices
Système de chaînage pour des dispositifs de transfert en amont

(30) Priorität: 27.08.2013 DE 102013014266
(43) Veröffentlichungstag der Anmeldung: 04.03.2015
(73) Patentinhaber: Liebherr-Verzahntechnik GmbH, 87437 Kempten (DE)
(72) Erfinder: Lingenhöl, Dipl.-Ing. (TU) Klaus, 87437 Kempten (DE); Radigk, Uwe, 88299 Leutkirch-Friesenhofen (DE); Landerer, Ing.grad. Roman, 87477 Sulzberg (DE)
(74) Vertreter: Laufhütte, Dieter

(56) Entgegenhaltungen:
- EP-A2- 1 125 684
- DE-A1-102007 009 329

## Beschreibung

Die Erfindung betrifft ein Verkettungssystem für Obertransfereinrichtungen mit mindestens zwei Portalen zum Transport von Werkstücken oder Werkstücken auf Paletten zwischen Maschinen und/oder Zuführ-/Abführeinrichtungen und umgekehrt. Jedes der Portale ist dabei mit mindestens einem Ladegerät ausgestattet und die zwei Portale sind mit einem Übergabemodul zur Beförderung der Werkstücke oder der Werkstücke auf Paletten zwischen einem ersten und einem zweiten Portal ausgerüstet, welches wiederum mit einer Transporteinrichtung zur Aufnahme von einem oder mehreren Werkstücken oder Werkstückpaletten ausgestattet ist.

In der Serienfertigung von Werkstücken, inbesondere bei der mechanischen Bearbeitung von Werkstücken, werden diese in der Regel nach einem genau geplanten Fertigungsablauf Werkzeugmaschinen zur Durchführung einer bestimmten Fertigungsoperationsfolge zugeführt. Dazu werden die Werkstücke zunächst an einer Zuführeinrichtung in ein Fertigungssystem eingeschleust und dann innerhalb dieses Systems von einer Bearbeitungsfolge zur nächsten vollautomatisiert weitertransportiert. Je nach Anzahl der Fertigungsoperationen werden die Werkstücke am Ende der Bearbeitung entweder über eine Abgabevorrichtung von dem Fertigungsyssystem abgegeben oder über eine Zwischenautomation an ein folgendes Fertigungssystem zur Durchführung weiterer Bearbeitungsoperationen übergeben.

Je nach dem zu welcher Produktgruppe sich die Werkstücke zuordnen lassen, haben sich in der Industrie bestimmte Fertigungssysteme mit Verkettungen wie z.B. Bänder, Portale, Palettierzellen mit Bodenrollern oder ähnliche Automationen bewährt. Für die Bearbeitung von Kurbelwellen, Motorblöcke oder Zylinderköpfe werden häufig Portale zur Verknüpfung von Werkzeugmaschinen eingesetzt, wobei diese Portale zur Beladung der Werkzeugmaschinen üblicherweise oberhalb der Maschinen verlaufen.

Mit diesen Portalen werden die einzelnen Werkzeugmaschinen mit Werkstücken versorgt, wobei aus Gründen einer flexiblen Produktionsmengenanpassung häufig mehrere redundante Werkzeugmaschinen zur parallelen Bearbeitung gleicher Produktionsfolgen nebeneinander unter einem Portal aufgestellt sind. So kann flexibel auf unterschiedliche Produktionsmengen reagiert werden, in dem einzelne Maschinen bei geringen Produktionsstückzahlen einfach ab- bzw.- zugeschaltet werden und das Ladegerät am Portal diese Maschinen überfährt ohne eine Beladung durchzuführen. Ebenso können Maschinen die zu Wartungs- oder Servicezwecken abgeschaltet wurden problemlos aus der Fertigung genommen werden, ohne dass deshalb die gesamte Fertigungslinie abgeschaltet werden muss. Durch die Möglichkeit die Übergabepositionen an den Maschinen individuell anzufahren bzw. diese zu überfahren kann mit Fertigungssystemen dieser Bauart eine flexible Produktionsmengenanpassung erfolgen.

Auch beim Umrüsten des Fertigungssystems sind hier viele Vorteile zu sehen. So können redundante Maschinen schon teilweise aus der Produktion genommen und umgerüstet werden, während auf den Parallelmaschine noch die aktuelle Serie fertig bearbeitet wird.

Die Anordnung der Maschinen wird zunächst entsprechend der Bearbeitungsreihenfolge gewählt. Darüberhinaus muss sich die Maschinenaufstellung aber auch an den örtlichen Gegebenheiten und baulichen Bedingungen orientieren. So beinflussen z.B. Tragsäulen für übergeordnete Stockwerke oder Hallendecke, Hallenlänge oder verfügbare Aufstellflächen für das Fertigungssystem den Verlauf der Automation bzw. begrenzen teilweise deren Länge. Durch die Aufstellung und die Bauart der Maschinen bedingt wird folglich dann noch genauer der Verlauf der oben liegenden Automation definiert, da die Übergabe-Übernahmeposition der Maschine den Portalverlauf ebenfalls bestimmen.

Weiterhin kommen noch weitere Anforderungen an die Automation hinzu die sich aus Anforderungen wie der Übergabegenauigkeit des Ladegeräts an die Werkstückaufnahme einer Werkzeugmaschine, zulässige Temperaturdehnung bzw. Längenänderung des Portalträgers, Länge eines Kabelschlepp zur elektrischen Versorgung des Ladegerätes und ähnlichen Randbedingungen ergeben. Da häufig mehrere Ladegeräte gleichzeitig auf dem Portal verfahren hat auch dies über die maximal zulässige Schwingungen und den sich daraus ergebenden zulässigen Verfahrgeschwindigkeiten bzw. den Anforderungen an die Positioniergenauigkeit einen Einfluss auf die Portallänge. Alle diese Randbedingungen begrenzen neben den örtlichen Anforderungen noch zusätzlich die Portallänge.

In der Praxis werden daher die Portale in Abschnitte aufgeteilt zwischen denen mit einer weiteren Automation, häufig einer Bodenautomation, die Werkstücke von einem zum nächsten Portal gefördert werden. Diese Automation kann aus einer Vielzahl möglicher Transporteinrichtungen wie z.B. Bänder, Shuttles, Staurollenförderer oder ähnlichen Einrichtungen bestehen.

In der DE 10 2007 009 329 A1 wird eine Bearbeitungslinie mit einer Mehrzahl an Bearbeitungsmaschinen gezeigt, die über eine Transportbahn, auf der mehrere Beladeeinheiten verfahrbar sind, miteinander verbunden sind. Die Beladeeinheiten fördern die Werkstücke von einer Aufgabestelle zu den einzelnen Maschinen um dann nach der Bearbeitung die fertigen Werkstücke an einer Abladestation abzulegen. Dieser klassische Aufbau einer Portaleinrichtung wird bei vielen Verkettungssystemen mit einer Obertransfereinrichtung zum Transport von Werkstücken gewählt. In diesem Fall ist aber nur ein einzelnes Portal zur Verkettung von Werkzeugmaschinen mit einer Aufnahme- und Abladestation gezeigt.

Die EP 1 125 684 A1 zeigt ein Fertigungssystem nach dem Oberbegriff des Anspruchs 1 mit mehreren Portalen die mittels Stapelzellen direkt verbunden sind. Bei dieser Anordnung müssen die einzelnen Werkstücke immer zunächst in Teileträger innerhalb der Stapelzelle abgelegt werden. Mit einer Umsetzeinrichtung werden die gefüllten Teileträger dann von einem Stapelplatz auf den danebenliegenden Stapelplatz umgestapelt, bevor sie dort vom anderen Portal aufgenommen werden können. Dieses System eignet sich vor allem für kleine, leichte Werkstücke mit kurzen Bearbeitungszykluszeiten und wird häufig in der Großserienfertigung (Massenfertigung) von Automobilgetrieben, hier häufig bei der Zahnradfertigung für Getriebe, realisiert.

Bei großen, schweren Werkstücken ist die Lagerung einzelner Werkstücke in Gitterkörben für Stapelzellen nicht geeignet. Ebenso sind durch die häufig längeren Bearbeitungszeiten für die einzelnen Teile deutlich weniger Werkstücke innerhalb einer Fertigungszelle in der Produktion, so das eine direkte Übergabe einzelner Werkstück zwischen den Portalen erforderlich wird. Die Zwischenspeicherung der Werkstücke tritt, bei der Auswahl der Automation, als Bewertungskriterium in Ihrer Gewichtung hier hinter der direkten Teileübergabe der Werkstücke zurück.

Die Aufgabe der vorliegenden Erfindung besteht darin, ein neuartiges Übergabemodul zum Transport von Werkstücken oder von Werkstücken in/auf Paletten an die Hand zu geben, bei dem gleichzeitig die Möglichkeit besteht Werkstücke oder Werkstückpaletten aus dem direkten Produktionsfluss ein- und/oder auszuschleusen oder aber auch zwischen zu speichern bis diese wieder in den Produktionsfluss eingeschleust werden können. Die Erfindung wird vorzugsweise bei der Verknüpfung von Portalen eingesetzt, bei der die direkte Teileübergabe zwischen den Portalen Vorrang vor einer Zwischenspeicherung von Werkstücken hat, wie es insbesondere bei der Bearbeitung großer, schwerer Werkstücke mit längeren Bearbeitungszeiten, wie z.B. Kurbelwellen, Motorblöcke oder Zylinderköpfen, vorkommt.

Diese Aufgabe wird in Verbindung mit dem Oberbegriff des Patentanspruchs 1 erfindungsgemäß durch die kennzeichnenden Merkmale des Patentanspruchs 1 gelöst.

Die mit der Erfindung erzielten Vorteile bestehen insbesondere darin, dass die Funktionalität der Übergabeeinrichtung zwischen zwei Ladeportalen erweitert wird. So wird aus einer reinen Übergabe zwischen zwei Portalen eine Funktionseinheit in der eine Vielzahl an weiteren Zusatzaufgaben durchgeführt werden kann, sofern die Taktzeit der Portale dies vorsieht bzw. es durch Umrüstarbeiten an der Linie oder Störungen an einzelnen Maschinen z.B. eine Zwischenspeicherung erforderlich wird.

Neben Aufgaben wie einer Werkstückspeicherung in verschiedenen Arten von Zwischenspeichern, Bändern oder sogenannten Entkopplungsmodulen können einzelne Werkstücke ein- bzw. ausgeschleust werden. Eine Übergabe an eine Messeinrichtung oder eine Einrichtung zur Durchführung von SPC-Messaufgaben wäre ebenso realisierbar wie verschiedene weitere Funktionseinrichtungen für reinigen, markieren, beschriften, und verschiedene Tätigkeiten am und um den Greifer wie Wartung oder Reparatur sowie ein Greiferumbau oder Wechsel von Komponenten am Greifer oder sogar ein Greiferwechsel wäre realisierbar.

Je nach den nachfolgenden Operationen bzw. der Maschinen für diese Operationsfolge könnte auch eine Ver-/Entschraubungsstation vorgesehen sein um Werkstücke mit Werkstückträgern zu verschrauben, welche dann in den sich anschließenden Maschinen zur Fixierung der Werkstücke beim Bearbeitungsprozess genutzt werden.

Um diese Funktionen zu realisieren ist in dem Übergabemodul an einer oder mehreren Positionen, an denen die Transporteinrichtung Werkstücke an die Ladegeräte übergeben oder von diesen entgegennehmen kann, eine Öffnung in der Sicherheits- und Tropfwanne angeordnet. Erfindungsgemäß ist diese Öffnung bedarfsweise durch eine verfahr- oder verschwenkbare Ladeluke verschlossen werden. Die Ladegeräte sind dabei so ausgeführt, dass sie durch diese Öffnung hindurchreichen können und unterhalb des Übergabemodules Werkstücke an eine darunterliegende Funktionseinrichtung übergeben oder von dort abholen können. Alternativ kann auch eine darunter angeordnete Funktionseinrichtung Werkstücke durch diese Öffnung nach oben heben und dort an die Ladegeräte übergeben.

Je nach der Aufgabenstellung für die Ladegeräte kann es sich dabei um vertikale Ladeachsen in I- oder H-Anordnung handeln, ebenso wären Schwenkarme, sogenannte fliegende Roboter oder ähnliche Geräteausführungen geeignet um die Werkstücke von der Transporteinrichtung oder der darunterliegenden Funktionseinrichtung zu übernehmen oder an diese abzugeben. Je nach Größe des Ladegerätes kann die Öffnung dementsprechend angepasst werden.

Die Ladeöffnung kann durch eine einschwenkbare oder einfahrbaren Ladeluke verschließbar sein, wenn sich das Transportmodul nicht gerade über dieser Öffnung befindet. Dabei kann die Ladeluke zwischen der Unterseite des Transportmoduls und der Oberseite der Sicherheits- und Tropfwanne angeordnet sein. Dies hat den Vorteil, dass dann ohne Gefährdung an den darunterliegenden Funktionseinrichtungen Montage- oder Wartungsarbeiten durchgeführt werden können, ohne das aus Sicherheitsgründen die darüber befindliche Automation außer Betrieb gesetzt werden muss. Ebenso verhindert die Ladeluke das Flüssigkeiten oder Späne die von den Werkstücken herabtropfen/herabfallen können, die unten liegende Funktionseinrichtung verschmutzen, wenn diese nicht genutzt wird. Weiterhin kann es möglich sein diese Ladeluke(n) im Übergabemodul vorzusehen um einen Übergabebereich für künftige Aufgaben vorzubereiten. Auch in diesem Fall muss die Ladeluke abdeckbar sein.

Das Übergabemodul kann in verschiedenen Ausrichtungsvarianten unter den Übergabebereichen der Portale angeordnet sein. Vorzugsweise wird eine Aufstellung in Längsrichtung der Portalträger erfolgen, aber auch eine Aufstellung quer zum Portal oder eine Mischung aus beidem wäre möglich. Dadurch kann das Layout für die Portalaufstellung besser an die örtlichen Gegebenheiten angepasst werden.

Weitere Vorteile und Merkmale der Erfindung werden im Folgenden anhand der Zeichnung näher erläutert. Es zeigen:
- Fig. 1:: Verkettungssystem für Obertransfereinrichtungen gemäß der Erfindung mit einem Übergabemodul und einer Bodenautomation
- Fig. 2:: Verkettungssystem für Obertransfereinrichtungen mit einem verlängerten Übergabemodul und zwei Ladeöffnungen
- Fig. 3:: Verkettungssystem für Obertransfereinrichtungen mit einem Entkopplungsmodul zur Zwischenspeicherung von Werkstücken
- Fig. 4:: Verkettungssystem für Obertransfereinrichtungen mit einem quer zur Transportrichtung angeordneten Übergabemodul.

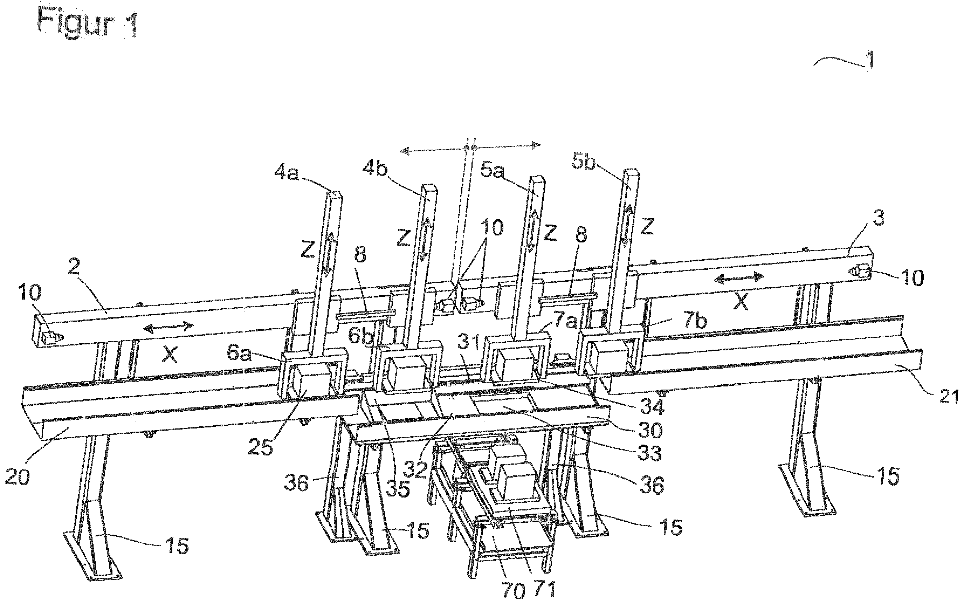

Figur 1 zeigt eine perspektivische Ansicht einer Ausführungsvariante des erfindungsgemäßen Verkettungssystem für Obertransfereinrichtungen 1 mit einem Übergabemodul 30.

Zwischen einem ersten Portalträger 2 und einem zweiten Portalträger 3 befindet sich das erfindungsgemäße Übergabemodul 30. Mit diesem Übergabemodul kann ein Werkstück 25 ggf. auf einer Werkstückpalette 34 mit einer Transporteinrichtung 35 von dem ersten Ladegerät 4b an das zweite Portal Ladegerät 5a übergeben werden oder umgekehrt. Erfindungsgemäß bestehen die Ladegeräte aus jeweils zwei Vertikalachsen (4a,4b und 5a,5b) wobei jeweils zwei Achsen miteinander mit einem Koppelglied 8 verbunden sind (eine sogenannte H-Anordnung) und in dieser Anordnung verfahren werden können. Jede der Vertikalachsen besitzt eine separat verfahrbare Z-Achse mit der ein Werkstück 25 oder ein Werkstück auf einer Werkstückpalette 34 vom Übergabemodul oder einer externen Einrichtung, durch einen Greifer 6a,6b,7a,7b übernommen oder wieder an diese abgegeben werden kann. Unter externer Einrichtung versteht man in diesem Zusammenhang eine Aufgabe- oder Abgabeeinrichtung oder auch eine Werkzeugmaschine sein, die sich im vor- oder nachgeschalteten Bereich der Ladeportale befindet.

In den Bereichen in denen sich keine Maschinen unter den Portalen befinden sind die Portalfahrwege aus Sicherheits- und Sauberkeitsgründen durch sogenannte Wannen 20,21 gesichert. Die Portalträger 2,3 sind auf den Portalstützen 15 befestigt. Das Übergabemodul 30 steht in diesem Ausführungsbeispiel auf separaten Bodenstützen 36 unterhalb der Portalträger 2 und 3 und kann von den Ladegeräten überfahren werden. Der max. Fahrweg der Ladegeräte in X-Richtung wird durch die Endanschläge 10 begrenzt.

Im Bereich des Übergabemodules 30 können unter diesem verschiedene Funktionseinrichtungen angeordnet sein. Dargestellt ist hier eine Bodenautomation 70 mit einer Werkstückpalette 71 zur Aufnahme einzelner Werkstücke 25, hier auf Werkstückpaletten 34 montiert. Erreicht werden kann die Bodenautomation vom Ladegerät 5a durch eine Ladeöffnung 33 im Übergabemodul. Diese kann bedarfsweise durch eine Ladeluke 32 verschlossen sein, um einen Schutzbereich unter dem Übergabeportal zu schaffen in dem sich Personen bewegen können, ohne dass das Übergabemodul stillgesetzt werden muss. Die Unterseite des Übergabemodules befindet sich dabei in einer Höhe die eine bequeme Nutzung des Raumes unter dem Modul durch Personen/Maschinenbediener zulässt, wobei außerdem auf eine ausreichende Kopffreiheit geachtet wurde.

Den Transport einzelner Werkstück 25 zwischen den Greifern 4b und 5a übernimmt eine Transporteinrichtung 35 die an einer Linearführung 31 zwischen den Übergabepositionen in X-Richtung verfahren werden kann. Die Transporteinrichtung wird programmgesteuert unter einer der Übergabepositionen zum Ladegerät positioniert und kann dort dann Werkstücke übernehmen oder übergeben.

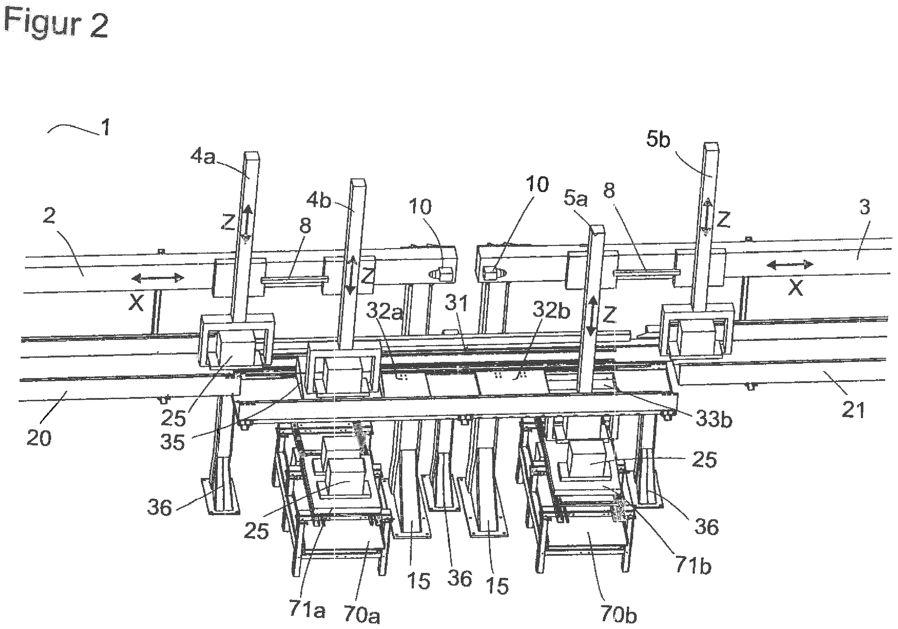

Die Figur 2 zeigt eine verlängerte Variante des Verkettungssystems mit Übergabemodul aus der Figur1. Bei dieser Variante ist es möglich, dass nicht nur die beiden inneren Ladegeräte 4b und 5a auf eine darunterliegende Einrichtung zugreifen können sondern in diesem Falle alle vier Ladegeräte. Zusätzlich sind nun zwei Funktionseinrichtungen unter dem Modul angeordnet. Hierzu ist es erforderlich das Übergabemodul zu verlängern, so dass alle Ladegeräte über die jeweils zugeordnete Ladeöffnung fahren können. Dadurch ist ein Umsetzen der Werkstücke zwischen den Greifer nicht erforderlich. Je nach den Einrichtungen unter den Portalen und deren Funktion kann dies ansonsten teilweise notwendig sein. Selbstverständlich können auch mehr als die zwei dargestellten Ladeöffnungen im Übergabemodul angeordnet sein. Dies hängt u.a. vom vorhandenen Platz oder auch von der Anzahl der unterbauten Funktionseinheiten ab.

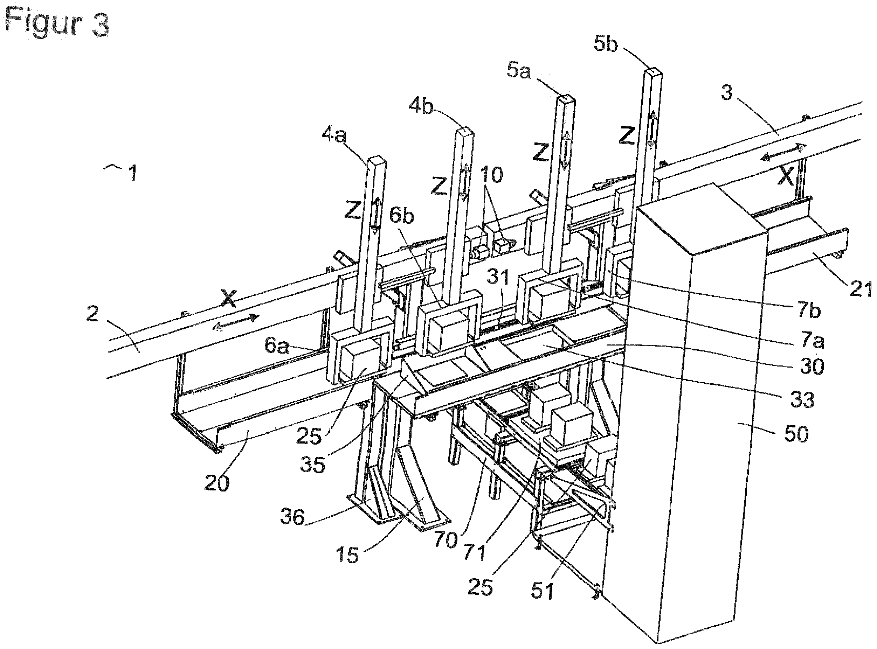

Figur 3 zeigt das Übergabemodul 30 aus der Figur 1 in Verbindung mit einem externen Entkopplungsmodul 50 zur Zwischenspeicherung von auf Speicherpaletten 71 gelagerten Werkstücken 25. Über einen am Entkopplungsmodul angebrachten vertikalen, externen Aufzug 51 können die Speicherpaletten 71 in verschiedenen Ebenen des Entkopplungsmodules 50 vor dem Weitertransport zwischengelagert werden. Die Werkstücke 25 werden hierzu auf den Speicherpaletten 71 von den Ladegeräten abgelegt. Wenn die Speicherpalette gefüllt ist wird sie von der Bodenautomation an den Aufzug des Entkopplungsmoduls übergeben. Der Aufzug befördert nun die Palette senkrecht am Entkopplungsmodul noch oben und schiebt die Palette in einen freien Speicherplatz im Speicherturm. Sollen Werkstücke aus dem Entkopplungsmodul entnommen werden erfolgt der Vorgang in umgekehrter Reihenfolge. Sollte mehr Speicherkapazität benötigt werden, kann ein weiteres Entkopplungsmodul hinter den Portalen angeordnet sein.

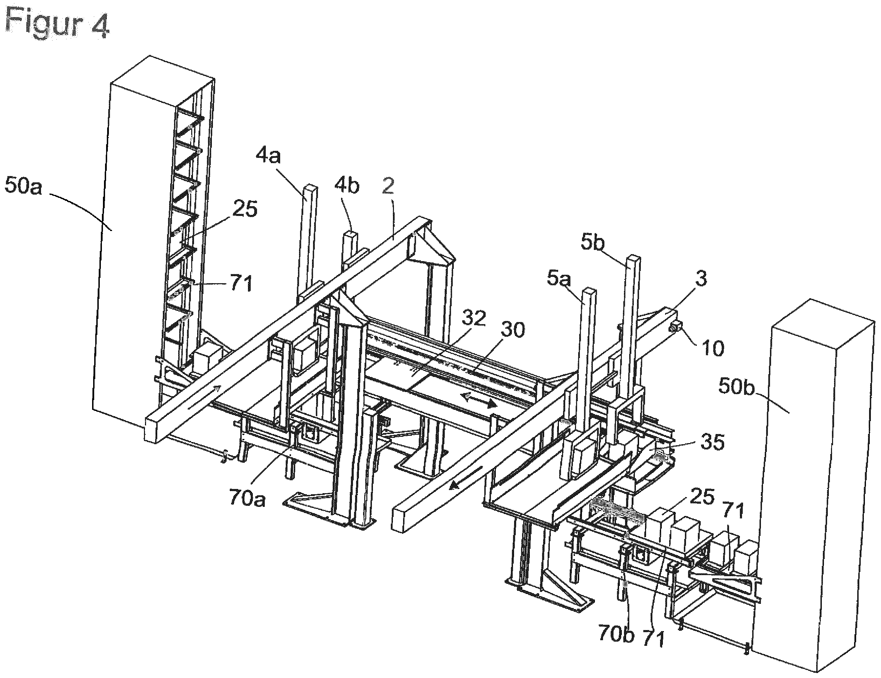

Die in der Figur 4 dargestellte Variante zeigt das Verkettungssystem mit einem Übergabemodul 30 in Queranordnung und zwei nebengestellte Entkopplungsmodulen 50 zur Aufnahme von Werkstücken 25 auf Speicherpaletten 71. Bei der gezeigten Anordnung wird die Materialflussrichtung zwischen einem ersten Ladeportal 2 und einem zweiten Ladeportal 3 gedreht. Selbstverständlich könnte diese Anordnung auch gewählt werden, wenn aus konstruktiven oder layouttechnischen Gründen ein Versatz zwischen den zwei Ladeportalen 2,3 notwendig wird und dabei die Materialflussrichtung gleich bleibt. Weiterhin ist auch eine Übereckanordnung der Ladeportale 2,3 oder eine Abzweigung aus einer Portallinie damit möglich.

## Patentansprüche

1. Verkettungssystem für Obertransfereinrichtungen (1) mit:
- mindestens zwei Portalen zum Transport von Werkstücken (25) oder Werkstücken auf Paletten (34) zwischen Maschinen und/oder Zuführ-/Abführeinrichtungen und umgekehrt,
- mindestens einem Ladegerät (4a,4b; 5a, 5b) je Portal, wobei jedes Ladegerät (4a, 4b; 5a, 5b) entlang der Portalträger (2, 3) des entsprechenden Portals in horizontale Richtung (X) verfahrbar ist, und wobei jedes Ladegerät (4a, 4b; 5a, 5b) einen in vertikale Richtung (Z) verfahrbaren Greifer (6a, 6b; 7a, 7b) zum Übernehmen eines Werkstücks (25) oder einer Werkstückpalette (34) aufweist;
- einem Übergabemodul (30) zur Beförderung der Werkstücke (25) oder der Werkstück auf Paletten (34) zwischen einer Übergabeposition des ersten Portals (2) und einer Übergabeposition des zweiten Portals (3),
wobei das Übergabemodul (30) mit einer Transporteinrichtung (35) zur Aufnahme von einem oder mehreren Werkstücken (25) oder Werkstückpaletten (34) und mit einer Linearführung (31) ausgerüstet ist, wobei die Transporteinrichtung (35) an der Linearführung (31) zwischen den Übergabepositionen in horizontale Richtung verfahrbar ist und das Übergabemodul (30) mit mindestens einer Ladeöffnung (33) versehen ist,
**dadurch gekennzeichnet,**
**dass** die mindestens eine Ladeöffnung (33), durch die ein oder mehrere Ladegeräte (4a, 4b; 5a, 5b) nach unten durch das Übergabemodul (30) durchgreifen können im Übergabemodul (30) bedarfsweise mit einer einschwenkbaren und/oder verschiebbaren Ladeluke (32) abgedeckt werde kann und dass die Unterseite des Übergabemoduls (30) als eine
Sicherheits- und Tropfwanne (20, 21) ausgebildet ist.

2. Verkettungssystem für Obertransfereinrichtungen (1) nach Anspruch 1,
**dadurch gekennzeichnet, dass** unterhalb der mindestens einen Ladeöffnung (33) eine Speichereinrichtung und/oder eine Übergabeeinrichtung zu einer Speichereinrichtung, für Werkstücke (25) und/oder Werkstück auf Paletten (34), vorgesehen ist.

3. Verkettungssystem für Obertransfereinrichtungen (1) nach Anspruch 1, **dadurch gekennzeichnet, dass** unterhalb der mindestens einen Ladeöffnung (33) eine Förder-, Mess-, Markier-, Reinigungs-, Schraub- und/oder Ein-/und Ausschleuseinrichtung für einzelne Werkstücke (25) oder Werkstückpaletten (34) vorgesehen ist

4. Verkettungssystem für Obertransfereinrichtungen (1) nach einem der vorhergehenden Ansprüche, **dadurch gekennzeichnet, dass** das unterhalb der mindestens einen Ladeöffnung (33) eine Einrichtung für den Greiferwechsel vorgesehen ist oder, dass der Greifer Greiferfinger aufweist, wobei unterhalb der mindestens einen Ladeöffnung (33) eine Einrichtung zum Greiferfingerwechsel vorgesehen ist.

5. Verkettungssystem für Obertransfereinrichtungen (1) nach einem der vorhergehenden Ansprüche, **dadurch gekennzeichnet, dass** die einschwenkbare und/oder verschiebbare Ladeluke (32) zwischen der Transporteinrichtung und der darunterliegenden Sicherheits- und Tropfwanne (20, 21) angeordnet ist.

6. Verkettungssystem für Obertransfereinrichtungen (1) nach einem der vorhergehenden Ansprüche, **dadurch gekennzeichnet, dass** das Übergabemodul (30) in Längsrichtung der Portale angeordnet ist.

7. Verkettungssystem für Obertransfereinrichtungen (1) nach einem der vorhergehenden Ansprüche, **dadurch gekennzeichnet, dass** das Übergabemodul (30) quer zu wenigstens einem der Portale angeordnet ist.

8. Verkettungssystem für Obertransfereinrichtungen (1) nach einem der vorhergehenden Ansprüche, **dadurch gekennzeichnet, dass** sich die Unterseite des Übergabemoduls (30) in einer durchtrittsfähigen Höhe befindet.

9. Verkettungssystem für Obertransfereinrichtungen (1) nach einem der vorhergehenden Ansprüche, **dadurch gekennzeichnet, dass** sich die Träger (2, 3) für die Portale in unterschiedlichen Höhe gegenüber dem Übergabemodul (30) befinden können.

10. Verkettungssystem für Obertransfereinrichtungen (1) nach einem der vorhergehenden Ansprüche, **dadurch gekennzeichnet, dass** es sich bei dem Ladegerät (4a, 4b; 5a, 5b) um einen Roboter, einen Knickarmroboter, eine Vertikalachse, einen Schwenkarm oder einen Einrichtung zum Transport oder zur Aufnahme/Aufgabe von Werkstücken (25) handelt.

## Claims

1. An interlinking system for overhead transfer devices (1) comprising:
- at least two portals for the transport of workpieces (25) or workpieces on pallets (34) between machines and/or supply/removal devices and vice versa,
- at least one loading unit (4a, 4b; 5a, 5b) per portal, with each loading unit (4a, 4b; 5a, 5b) being movable in the horizontal direction (X) along the portal carrier (2, 3) of the corresponding portal and with each loading unit (4a, 4b; 5a, 5b) having a gripper (6a, 6b; 7a, 7b) moveable in a vertical direction (Z) for receiving a workpiece (25) or a workpiece pallet (34);
- a transfer module (30) for conveying the workpieces (25) or the workpieces on pallets (34) between a transfer position of the first portal (2) and a transfer position of the second portal (3),
wherein the transfer module (30) is equipped with a transport device (35) for receiving one or more workpieces (25) or workpiece pallets (34) and with a linear guidance (31), with the transport device (35) being movable at the linear guidance (31) between the transfer positions in the horizontal direction und the transfer module (30) being provided with at least one loading opening (33),
**characterized in that**
the at least one loading opening (33) through which one or more loading units (4a, 4b; 5a, 5b) can engage downwardly through the transfer module (30) can be covered in the transfer module (30) as required by an inwardly pivotable and/or displaceable loading hatch (32); and **in that** the lower side of the transfer module (30) is configured as a security and drip tray (20, 21).

2. An interlinking system for overhead transfer devices (1) in accordance with claim 1, **characterized in that** a storage device and/or a transfer device to a storage device, for workpieces (25) and/or workpieces on pallets (34) is provided beneath the at least one loading opening (33).

3. An interlinking system for overhead transfer devices (1) in accordance with claim 1, **characterized in that** a device for conveying, measuring, marking, cleaning, screwing and/or channeling in or out for individual workpieces (25) or workpiece pallets (34) is provided beneath the at least one loading opening (33).

4. An interlinking system for overhead transfer devices (1) in accordance with one of the preceding claims, **characterized in that** a device for the gripper change is provided beneath the at least one loading opening (33); or **in that** the gripper has gripper fingers, with a device for gripper finger change being provided beneath the at least one loading opening (33).

5. An interlinking system for overhead transfer devices (1) in accordance with one of the preceding claims, **characterized in that** the inwardly pivotable and/or displaceable loading hatch (32) is arranged between the transport device and the security and drip tray (20, 21) arranged thereunder.

6. An interlinking system for overhead transfer devices (1) in accordance with one of the preceding claims, **characterized in that** the transfer module (30) is arranged in the longitudinal direction of the portals.

7. An interlinking system for overhead transfer devices (1) in accordance with one of the preceding claims, **characterized in that** the transfer module (30) is arranged transversely to at least one of the portals.

8. An interlinking system for overhead transfer devices (1) in accordance with one of the preceding claims, **characterized in that** the lower side of the transfer module (30) is located at a height which can be passed through.

9. An interlinking system for overhead transfer devices (1) in accordance with one of the preceding claims, **characterized in that** the carriers (2, 3) for the portals can be located at different heights with respect to the transfer module (30).

10. An interlinking system for overhead transfer devices (1) in accordance with one of the preceding claims, **characterized in that** the loading unit (4a, 4b; 5a, 5b) is a robot, an articulated robot, a vertical axle, a pivot arm or a device for the transport or for the receiving/charging of workpieces (25).

## Revendications

1. Système de chaînage pour dispositifs de transfert aérien (1), comprenant :
- au moins deux portiques destinés au transport de pièces (25) ou de pièces sur des palettes (34) entre des machines et/ou dispositifs d'acheminement / d'enlèvement et vice-versa,
- au moins un appareil de chargement (4a, 4b ; 5a, 5b) par portique, chaque appareil de chargement (4a, 4b ; 5a, 5b) pouvant être déplacé dans la direction horizontale (X) le long des poutres de portique (2, 3) du portique correspondant, et chaque appareil de chargement (4a, 4b ; 5a, 5b) comportant un préhenseur (6a, 6b ; 7a, 7b) pouvant être déplacé dans la direction verticale (Z), destiné à réceptionner une pièce (25) ou une palette de pièces (34) ;
- un module de transfert (30) destiné au transport des pièces (25) ou des pièces sur des palettes (34) entre une position de transfert du premier portique (2) et une position de transfert du second portique (3),
le module de transfert (30) étant équipé d'un dispositif de transport (35) destiné à recevoir une ou plusieurs pièces (25) ou palettes de pièces (34) et d'un guidage linéaire (31), le dispositif de transport (35) pouvant être déplacé dans la direction horizontale sur le guidage linéaire (31) entre les positions de transfert, et le module de transfert (30) étant pourvu d'au moins une ouverture de chargement (33),
**caractérisé en ce que**
l'au moins une ouverture de chargement (33), à travers laquelle un ou plusieurs appareils de chargement (4a, 4b ; 5a, 5b) peuvent s'engager vers le bas à travers le module de transfert (30), peut être recouverte dans le module de transfert (30) selon les besoins par une trappe de chargement (32) pivotante et/ou coulissante et **en ce que** le côté inférieur du module de transfert (30) est réalisé sous la forme d'un bac de sécurité et d'égouttement (20, 21).

2. Système de chaînage pour dispositifs de transfert aérien (1) selon la revendication 1, **caractérisé en ce qu'**un dispositif de stockage et/ou un dispositif de transfert vers un dispositif de stockage, pour des pièces (25) et/ou des pièces sur des palettes (34) est prévu sous l'au moins une ouverture de chargement (33).

3. Système de chaînage pour dispositifs de transfert aérien (1) selon la revendication 1, **caractérisé en ce qu'**un dispositif de transport, de mesure, de marquage, de nettoyage, de vissage et/ou de remise en circulation/d'extraction pour des pièces (25) individuelles ou des palettes de pièces (34) est prévu sous l'au moins une ouverture de chargement (33).

4. Système de chaînage pour dispositifs de transfert aérien (1) selon l'une des revendications précédentes, **caractérisé en ce qu'**un dispositif destiné au changement de préhenseur est prévu sous l'au moins une ouverture de chargement (33) ou **en ce que** le préhenseur comporte des doigts de préhension, un dispositif de changement de doigt de préhension étant prévu sous l'au moins une ouverture de chargement (33).

5. Système de chaînage pour dispositifs de transfert aérien (1) selon l'une des revendications précédentes, **caractérisé en ce que** la trappe de chargement (32) pivotante et/ou coulissante est disposée entre le dispositif de transport et le bac de sécurité et d'égouttement (20, 21) se trouvant sous celui-ci.

6. Système de chaînage pour dispositifs de transfert aérien (1) selon l'une des revendications précédentes, **caractérisé en ce que** le module de transfert (30) est disposé dans la direction longitudinale des portiques.

7. Système de chaînage pour dispositifs de transfert aérien (1) selon l'une des revendications précédentes, **caractérisé en ce que** le module de transfert (30) est disposé transversalement à au moins un des portiques.

8. Système de chaînage pour dispositifs de transfert aérien (1) selon l'une des revendications précédentes, **caractérisé en ce que** le côté inférieur du module de transfert (30) se trouve à une hauteur permettant le passage sous celui-ci.

9. Système de chaînage pour dispositifs de transfert aérien (1) selon l'une des revendications précédentes, **caractérisé en ce que** les poutres (2, 3) pour les portiques peuvent se trouver à des hauteurs différentes par rapport au module de transfert (30).

10. Système de chaînage pour dispositifs de transfert aérien (1) selon l'une des revendications précédentes, **caractérisé en ce que** l'appareil de chargement (4a, 4b ; 5a, 5b) est un robot, un robot à bras articulé, un axe vertical, un bras pivotant ou un dispositif de transport ou de réception/distribution de pièces (25).
